# EUROPEAN PATENT APPLICATION

(11) **EP 2 075 667 A1**
(43) Date of publication of application: **01.07.2009**
(21) Application number: 07301734.5
(22) Date of filing: 21.12.2007
(51) Int. Cl.: G06F 1/26, G06F 3/03

(54) **System comprising a wireless user operable device and a link device having charge storage means**

(71) Applicant: Thomson Licensing, 92100 Boulogne-Billancourt (FR)
(72) Inventor: Lindemann, Robert, 30559, Hannover (DE); Aylott, Mark, 35250, Saint Aubin D'Aubigne (FR)
(74) Representative: Arnold, Klaus-Peter

(57) **Abstract**

The system comprises a user operable device (1) having a first wireless transmitter and/or receiver (5) and a first charge storage means (3) for its operation, and a link device (2) having a second charge storage means (4) and a second wireless transmitter and/or receiver (6) for the operation of the user operable device (1). The link device (2) is connectable to the user operable device (1) for transferring charge from the second charge storage means (4) to the first charge storage means (3), when the user operable device (1) is not used. For the first and second charge storage means (3, 4) in particular a super-capacitor may be used.

## Description

### TECHNICAL FIELD OF THE INVENTION

The present invention relates to a system comprising a user operable device having a first wireless transmitter and/or receiver and a charge storage means, and a link device having a second wireless transmitter and/or receiver for the operation of the user operable device. The user operable device is in particular a wireless mouse or a wireless remote keyboard for controlling a PC, a laptop or a game console.

### BACKGROUND OF THE INVENTION

Wireless user operable devices of this kind usually have a dedicated link device with an USB connector plug for providing an interface for a wireless connection, when the link device is plugged into a corresponding USB port for example of a laptop or a PC. For establishing the wireless connection, often a Bluetooth connection, a Wi-Fi connection in accordance with an IEEE 802.11 standard or an IrDA infrared connection is used. However, it is also known to use proprietary wireless connections. In any of these cases, the wireless user operable device needs a power source to operate the wireless transmitter and other electronic components. This is usually a battery, either a disposable battery or a rechargeable battery. In case a rechargeable battery is used, a charger must be provided, which adds to the number of parts a user has to store, or which a user has to carry and which may be lost or forgotten, when he is travelling with the user operable device.

A wireless mouse unit is described in US 2002/0061739, which includes a wireless mouse comprising a rechargeable battery and a receiver station for receiving the signals as transmitted from the wireless mouse. The receiver station is electrically connected to and powered by a computer via a cable, and includes a charging terminal for recharging the rechargeable battery of the wireless mouse, when the wireless mouse is placed on the receiver station, eliminating therefore the need for a special charger to recharge the rechargeable battery of the wireless mouse. But the receiver station is comparatively bulky and not convenient for travelling.

A wireless system comprising a wireless mouse and a wireless USB link device is manufactured by the company SUZA International, which mouse can be used also without batteries by using a cable. The USB link device can be stored inside the cavity of the mouse.

In WO 2005/026937 a wireless mouse comprising a rechargeable battery is described, which includes a retractable cable and a spring mechanism for charging of the battery.

### BRIEF SUMMARY OF THE INVENTION

The system of the present invention comprises a user operable device and a link device, the user operable device having a first wireless transmitter and/or receiver and a first charge storage means, and the link device having a second charge storage means and a second wireless transmitter and/or receiver for the operative connection to the user operable device. The link device is connectable to the user operable device for transferring charge from the second charge storage means to the first charge storage means. The user operable device comprises in particular a first port and the link device comprises a second port for the operation of the link device and for charging of the second charge storage means, wherein the second port is connectable to the first port for transferring charge from the second charge storage means to the first charge storage means.

The user operable device is in a preferred embodiment a wireless mouse, pointing device, a joystick or a remote keyboard for controlling a PC, a laptop or a game console. The second charge storage means is charged advantageously during operation of the user operable device, for example when the link device is connected to a PC or a laptop for the operation of the user operable device, and charge from the second charge storage means is transferred to the first charge storage means, when the user operable device is not in operation, by connecting the link device to the user operable device.

The link device and the user operable device are equipped advantageously each with a USB port, because the USB bus is a convenient high-speed interface being widely used for computer and consumer electronics. The user operable device comprises in particular a female USB port and the link device a male USB port, which allows connecting the link device with the same port to the user operable device as well as to a laptop or PC. Male and female USB ports are sometimes also referred to as device and host ports.

The link device comprises in a further aspect of the invention a high capacity capacitor, also known as gold cap, as a charge storage means, which provides a very fast and efficient charge storage and which allows to construct a link device with very compact outside dimensions, so that the link device can be stored for example in a cavity of the user operable device, e.g. a wireless mouse. It is particular advantageous if the first and second ports are arranged in such a way that they are connected when the link device is stored in the user operable device. The link device and the user operable device, e.g. a wireless mouse, can be designed therefore in particular for convenient travelling.

### BRIEF DESCRIPTION OF THE DRAWINGS

Preferred embodiments of the invention are explained in more detail below by way of example with reference to schematic drawings, which show:
- Fig. 1: a system with a wireless mouse and a wireless USB link device,
- Fig. 2: a circuit diagram for showing the operation of the link device of Fig. 1, and
- Fig. 3: a circuit diagram with the link device and the wireless mouse of figure 1 being connected together.

### DETAILED DESCRIPTION OF PREFERRED EMBODIMENTS

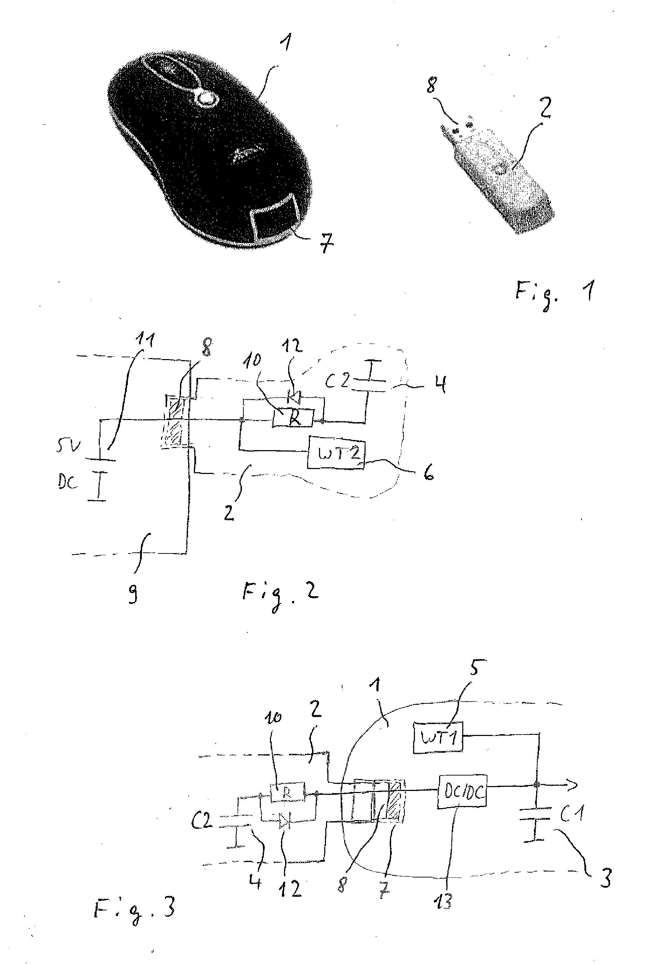

A wireless mouse 1 is shown in figure 1 together with a respective wireless USB link device 2, which constitute together a system with a user operable device and a link device for providing control of a PC, a laptop or a game console for example. The wireless mouse 1 has the advantage, that a user is not restricted by a cable during operation of the mouse. Instead, the cable is replaced by a second wireless transmitter 6 arranged inside the USB link device 2 and a first wireless transmitter 5 arranged inside the mouse 1, as shown in figures 2 and 3.

When the wireless mouse 1 is used for example together with a laptop 9, the USB link device 2 is connected to a USB port of the laptop 9, as shown in figure 2. The USB link device 2 comprises for this connection a port 8, in particular a male USB port 8. As known, a USB port provides a digital data connection in both directions as well as a 5 volts supply voltage, provided for example by a power supply source 11. While powering the receiver of the wireless mouse during normal operation, the supply voltage is also used to charge a second charge storage means 4 via the USB port 8, as shown in figure 2. The second charge storage means 4 can be for example a high capacity capacitor, or gold cap, a rechargeable battery or any type of capacitor, as indicated by the label C2. The second charge storage means 4 is charged via the second port 8 and, if required by the power supply source specification, also via a current source 10, for example a resistor, to avoid an overloading of the power supply source 11 of the laptop 9.

When the wireless mouse 1 is not in operation, then the USB link device 2 can be connected to the wireless mouse 1 for transferring charge from the second charge storage means 4 to a first charge storage means 3 included in the wireless mouse 1, as shown in figure 3. For this purpose, the mouse 1 comprises also a USB port 7, in particular a female USB port 7, so that the USB link device 2 can be connected to the mouse 1 with the same port 8, as used for the connection with the laptop 9 or any PC. The port 7 of the mouse 1 can be arranged in particular inside a cavity being arranged within the wireless mouse 1, which cavity is dimensioned such, that the USB link device 2 can be stored more or less completely inside the mouse 1.

When the USB link device 2 is connected to the wireless mouse 1, charge is transferred from the second charge storage means 4 to the first charge storage means 3, for charging of the first charge storage means 3. For this purpose, the current source or resistor 10 of the USB link device 2 may be bypassed by a diode 12, a transistor or a switch, for an efficient energy transfer. Further, also a small DC/DC converter 13, for example an up-converter, may be included in the wireless mouse 1 to discharge the second charge storage means 4 more or less completely. The DC/DC converter 13 provides in particular a fast and efficient charging of the first charge storage device 3, and may also include further charge control circuitry.

A USB port can supply up to 500 mA at 5 volts, which is more than required for the operation of the second wireless transmitter 6. The remaining current capacity of the power supply 11 is used therefore for charging the second charge storage means 4 during operation of the USB link device 2. In particular super-capacitors can be used for the first and second charge storage means 3, 4, which can be charged very fast. Super-capacitors, also known as ultra-capacitors, super caps or gold-caps, have the advantage that they can be charged much faster than batteries and they provide a much higher charge storage density as compared with conventional capacitors, e.g. electrolytic capacitors. They also allow for a higher number of charge/discharge cycles. In this case, a user has to connect the USB link device 2 only for a short time to the user operable device for providing the energy transfer.

Alternatively, for the first and second charge storage means 3, 4 capacitors of same capacity may be used, and the capacitor 3 is charged simply by capacitor 4 via diode 12, without any DC/DC converter. This a more cost-efficient arrangement and provides for example a charging of the capacitor 3 to a voltage of 2,5 volts, which is sufficient for a mouse operation, when capacitor 3 was charged initially to a voltage of 5 volts. In a further preferred embodiment, a super-capacitor is used for the first charge storage means 3 and for the second charge storage means 4 a rechargeable battery is used.

It is therefore no longer necessary to carry a separate battery charger or a cable for charging of the user operable device 1, or to replace rechargeable or not rechargeable batteries of the user operable device 1. A further advantage is that both devices 1, 2 constitute only a single item, when plugged together, which is very convenient for travelling.

The link device 2 therefore has a double function for the operation of the user operable device 1: During operation of the user operable device 1, the link device 2 provides a wireless data transmission for the operation of the user operable device 1, and when the user operable device 1 is not in use, the link device 2 provides a charging of the first charge storage means 3 included in the user operable device 1, when the link device 2 is connected to the user operable device 1.

Also other embodiments of the invention can be made by a person skilled in the art without departing from the spirit and scope of the present invention. The link device 2 is in particular not limited to a use with the USB bus, but may work alternatively with a PS/2 connector, IEEE1394, powered LAN/Ethernet or any other port. The circuit diagrams of figures 2 and 3 do not show the complete circuits of the wireless mouse 1 and the USB link device 2 and are simplified correspondingly for just illustrating the present invention. The invention resides therefore in the claims herein after appended.

## Claims

1. System comprising
a user operable device (1) having a first wireless transmitter and/or receiver (5) and a first charge storage means (3) for its operation, and
a link device (2) having a second charge storage means (4) and a second wireless transmitter and/or receiver (6) for the operation of the user operable device (1), **wherein**
the link device (2) is connectable to the user operable device (1) for transferring charge from the second charge storage means (4) to the first charge storage means (3).

2. The system of claim 1, **wherein** the user operable device (1) comprises a first port (7) and the link device (2) comprises a second port (8) for the operation of the link device (2) and for charging of the second charge storage means (4), the second port (8) being connectable to the first port (7) for transferring charge from the second charge storage means (4) to the first charge storage means (3).

3. The system of claim 2, **wherein** the link device (2) is a USB link device providing a wireless data transmission for the operation of the user operable device (1).

4. The system of claim 3, **wherein** the first port (7) is a female USB port and the second port (8) is a male USB port.

5. The system according to one of the preceding claims, **wherein** the second charge storage means (4) is charged during operation of the user operable device (1), and wherein charge from the second charge storage means (4) is transferred to the first charge storage means (3), when the user operable device (1) is not in operation, by connecting the link device (2) to the user operable device (1).

6. The system according to one of the preceding claims, **wherein** the link device (2) is connectable to a PC, a laptop or a game console for the operation of the user operable device (1) and for charging of the second charge storage means (4), when the user operable device (1) is in operation.

7. The system according to one of the preceding claims, **wherein** the first and second charge storage means (3, 4) are each one of a capacitor, a super-capacitor or a rechargeable battery.

8. The system according to one of the preceding claims, **wherein** the user operable device (1) is a wireless mouse, a wireless pointing device, a wireless remote keyboard or a joystick.
